# EUROPÄISCHE PATENTSCHRIFT

(11) **EP 2 228 702 B1**
(45) Veröffentlichungstag und Bekanntmachung des Hinweises auf die Patenterteilung: **09.03.2011**
(21) Anmeldenummer: 09003631.0
(22) Anmeldetag: 12.03.2009
(51) Int. Cl.: G05B 19/418, G05B 19/05

(54) **Verfahren zum Transfer von Daten zwischen zwei Automatisierungsgeräten**
Method for transferring data between two automation devices
Procédé de transfert de données entre deux appareils d'automatisation

(43) Veröffentlichungstag der Anmeldung: 15.09.2010
(73) Patentinhaber: Siemens Aktiengesellschaft, 80333 München (DE)
(72) Erfinder: Graf, Herbert, 76744 Wörth (DE); Graf, Markus, 76761 Rülzheim (DE); Nieder, Hartmut, 76149 Karlsruhe (DE)

(56) Entgegenhaltungen:
- EP-A- 1 906 277
- WO-A-02/078251
- QIMIN ZHANG: "Konzepte für die Kommunikation zwischen Automatisierungsgeräten" DISSERTATION, FAKULTÄT IV ELEKTROTECHNIK UND INFORMATIK DER TECHNISCHEN UNIVERSITÄT BERLIN, [Online] Bd. D 83, 3. September 2002 (2002-09-03), Seite 153pp, XP009120901 Gefunden im Internet: URL:http://edocs.tu-berlin.de/diss/2002/zh ang_qimin.pdf> [gefunden am 2009-07-03]
- G. SAUNUS, P. ROERSCH: "Speicherprogrammierbare Steuerung CX100/XC200 Kommunikation zwischen zwei Steuerungen mit Netzwerkvariablen über CAN" MÖLLER, 31. März 2008 (2008-03-31), XP002539779 Anwendungshinweis AN2700K19D

## Beschreibung

Die Erfindung betrifft ein Verfahren zum Transfer von Daten zwischen zwei Automatisierungsgeräten eines zur Steuerung und/oder Überwachung eines technischen Prozesses, insbesondere eines industriellen technischen Prozesses, vorgesehenen Automatisierungssystems. Im Betrieb führen derartige Automatisierungsgeräte jeweils ein Steuerungsprogramm aus und generieren oder ver- und bearbeiten dabei als Daten interne Daten und externe, sich auf den Prozess beziehende Daten. Zur Unterscheidung werden die beiden Automatisierungsgeräte auch als erstes und zweites Automatisierungsgerät bezeichnet.

Derartige Automatisierungsgeräte und eine Kombination mehrerer Automatisierungsgeräte zu einem Automatisierungssystem sind an sich bekannt. Bei komplexen Automatisierungssystemen besteht häufig die Notwendigkeit, Daten eines ersten Automatisierungsgeräts auch anderen Automatisierungsgeräten, zumindest einem vom gleichen Automatisierungssystem umfassten zweiten Automatisierungsgerät, zur Verfügung stellen zu müssen. Dafür hat bisher der jeweilige Programmierer eine individuelle Lösung erstellt. Dazu mussten auf einer Senderseite die zu sendenden Daten zusammengestellt werden. Je nach vom jeweiligen Automatisierungsgerät unterstützter Organisationsform von Daten kommt dafür z. B. ein so genannter Datenbaustein in Betracht. Dann musste ein Transportbaustein aus dem Bausteinvorrat des jeweiligen Automatisierungsgeräts ausgewählt und dieser mit einer entsprechenden Ver- und Entsorgung aufgerufen werden. Auf der Empfangsseite mussten der entsprechende Empfangsbaustein aufgerufen und die erhaltenen Daten an ihren Bestimmungsort transportiert werden. Die Zuordnung von Sende- und Empfangsdatenbereichen in den verwendeten Datenbausteinen zum jeweiligen lokalen Datenbestand, also z. B. echten Prozesssignalen, musste vom Programmierer manuell gelöst werden und war sehr fehleranfällig. Unterschiedliche Werte waren nur durch ihre Position bei der Übertragung unterscheidbar. Entsprechend konnte eine Änderung der Abfolge der übertragenen Daten auf Senderseite ohne eine korrespondierende Änderung der Auswertung der Daten auf Empfangsseite z. B. zur Auswertung eines Temperaturmesswertes als neue Vorgabe für einen Geschwindigkeitsgrenzwert oder Ähnlichem führen. Hinzu kommt als prinzipielle Schwierigkeit, dass es nicht möglich ist, den Datenbestand zweier Automatisierungsgeräte gleichzeitig aus der Projektierung zu laden, so dass beim Laden im vollen Betrieb, dem so genannten Änderungs-Laden, immer eine mehr oder weniger lange Zeitspanne bestand, in der Sende- und Empfangsseite keinen konsistenten Programmstand hatten, wodurch es zu ungültigen Zuständen der Daten kommen konnte. Dieser Effekt war besonders gravierend, wenn eine schon bestehende Datenübertragung geändert oder erweitert werden musste.

In der Dissertation von Qimin Zhang an der Fakultät für Elektrotechnik und Informatik der TU Berlin mit dem Titel "Konzepte für die Kommunikation zwischen Automatisierungsgeräten" wird eine blockorientierte Übertragung beschrieben, die im Wesentlichen der oben beschriebenen Verwendung von Transport- und Empfangsbaustein entspricht. Des Weiteren wird eine implizite Kommunikation beschrieben, bei der jedem zu übertragenden Datum die jeweilige Zieladresse zugeordnet ist und Datum und Zieladresse zusammen an das als Empfänger fungierende Automatisierungsgerät übertragen werden. Eine solche implizite Kommunikation ist jedoch problematisch, wenn sich das Steuerungsprogramm oder die Daten auf Sender- oder Empfängerseite ändern. In dem Dokument von G. Saunus und P. Roersch: "Speicherprogrammierbare Steuerungen XC100/XC200; Kommunikation zwischen zwei Steuerungen mit Netzwerkvariablen über CAN" wird ein Transfer von Daten mit Hilfe von ProzessDatenObjekten (PDO) beschrieben, wobei auf Senderseite ein Sende-PDO und auf Empfängerseite ein Empfangs-PDO benötigt werden. Diese Datenobjekte entsprechen im Wesentlichen den weiter oben beschriebenen Bausteinen, also Transport- bzw. Empfangsbaustein. Soweit dieses Dokument auch die Verwendung einer Kennung (COB-ID = CommunicationObject-Identifier) beschreibt, wird dadurch ein (Sende-/Empfangs-) PDO von anderen PDOs unterscheidbar, genau wie bei einer Mehrzahl von Transport- oder Empfangsbausteinen diese voneinander unterscheidbar sind.

Die WO 02/078251 beschreibt einen elektronischen Schaltkreis und ein Verfahren für eine Kommunikationsschnittstelle mit Zwischenspeicherung.

Eine Aufgabe der vorliegenden Erfindung besteht entsprechend darin, ein Verfahren zum Transfer von Daten zwischen zwei Automatisierungsgeräten zu schaffen, das die oben genannten Nachteile vermeidet, insbesondere die mit dem Datentransfer verbundenen Aufgaben in eine Systemdienstleistung zu kapseln und dem Programmierer so einen großen Teil der Arbeit abzunehmen. Der Programmierer soll nur noch eine Topologie eines dem Datentransfer zugrunde liegenden Netzwerks zwischen den einzelnen Automatisierungsgeräten angeben müssen und danach z. B. in der Lage sein, durch einfaches Verschalten Daten von einem Ausgang eines Bausteins in einem ersten Automatisierungsgerät zu einem Eingang eines Bausteins in einem anderen Automatisierungsgerät zu transportieren.

Diese Aufgabe wird erfindungsgemäß mit den Merkmalen des Anspruchs 1 gelöst. Dazu ist bei einem Verfahren zum Transfer von Daten zwischen einem ersten und einem zweiten Automatisierungsgerät, wobei jedes Automatisierungsgerät im Betrieb ein Steuerungsprogramm ausführt und dabei als Daten interne Daten und externe, sich auf den Prozess beziehende Daten generiert und ver- oder bearbeitet, vorgesehen, dass zumindest einmalig eine Verschaltung von Daten der beiden Automatisierungsgeräte erstellt und dabei jedem zu übertragenden Datum eine eindeutige Kennzeichnung zugewiesen wird und dass der auf Basis dieser Verschaltung zyklisch initiierte Datentransfer zumindest die folgenden Schritte umfasst:
- Zusammenstellen der zu transferierenden Daten in einem Sendedatenbereich jeweils mit bei der Verschaltung erzeugter Kennzeichnung entsprechend einer auf der Verschaltung basierenden Sendeliste durch das erste Automatisierungsgerät;
- Übertragen des Inhalts des Sendedatenbereichs an das zweite Automatisierungsgerät und
- Empfangen des Inhalts des Sendedatenbereichs beim zweiten Automatisierungsgerät sowie Übernahme der darin enthaltenen Daten entsprechend einer auf der Verschaltung basierenden Empfangsliste und der mit jedem Datum assoziierten Kennzeichnung.

Die beiden jeweils in einen Datentransfer involvierten Automatisierungsgeräte werden nur zur Unterscheidung als erstes und zweites Automatisierungsgerät bezeichnet. Des Weiteren wird in einem Datentransfer das erste Automatisierungsgerät für die weitere Beschreibung häufig als Sender und das zweite Automatisierungsgerät entsprechend als Empfänger betrachtet. Die Situation ist natürlich jederzeit umkehrbar und jedes Automatisierungsgerät kann sowohl als Sender als auch als Empfänger fungieren. Vom Sender übertragene Daten werden auch als Ursprungs- oder Quelldaten bezeichnet. Entsprechend werden beim Empfänger eingehende oder eingegangene Daten auch Zieldaten oder dergleichen genannt.

Der Vorteil der Erfindung besteht darin, dass für den Transfer von Daten eine die betroffenen Daten codierende Verschaltung erstellt und dabei jedem zu übertragenden Datum bereits bei der Erstellung einer solchen Verschaltung eine eindeutige Kennzeichnung zur Identifikation zugewiesen wird. Diese Kennzeichnung wird für jedes Datum bei jedem Transfervorgang mit übertragen. Sie macht innerhalb der transferierten Daten ein erstes Datum von einem anderen Datum unterscheidbar und löst so das Problem eventueller Abweichungen bei der Reihenfolge der Übermittlung der Daten. Dadurch wird verhindert, dass Daten aufgrund geänderter Lage in einem für den eigentlichen Transfer zwischen den Automatisierungsgeräten ausgetauschten Telegramm an eine falsche Zieladresse gelangen können. Mit Ausnahme dieser Kennzeichnung sind bei den beteiligten Automatisierungsgeräten keine gegenseitigen Kenntnisse über die jeweils zugrunde liegende Projektierung, also z. B. Speicheradressen, erforderlich. Auch werden Zwischenzustände durch unterschiedliche Ladezeitpunkte ohne Risiko einer Fehlzuordnung beherrscht. Als weiterer Vorteil ergibt sich, dass die Erfassung der Daten, also deren Zusammenstellung, und deren Übertragung getrennt sind und von speziellen Programmteilen auf dem jeweiligen Automatisierungsgerät übernommen werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die Verschaltung der zwischen erstem und zweitem Automatisierungsgerät zu transferierenden Daten während einer Projektierungsphase oder dergleichen auf einem dafür geeigneten Gerät, z. B. einem PC, erfolgt, bevorzugt mit einem graphischen Erstellungswerkzeug, z. B. einem CFC-Editor (Continuous Function Chart) nach IEC 61131-3. Dadurch ist es möglich, die Datenbestände beider beteiligter Automatisierungsgeräte gleichzeitig zu erreichen und dort die Daten zu verändern, insbesondere auch bei Verschaltungen eine für beide Datenbestände gültige Kennzeichnung zu vergeben. Der Programmierer kann dann für das erste Automatisierungsgerät, also eine Senderseite, ein zu übertragendes Datum auswählen (z. B. einen Ausgang eines Bausteins nach IEC) und für dieses Datum auf Seiten des zweiten Automatisierungsgeräts, also auf Empfängerseite, eine Zieladresse auswählen (z. B. den Eingang eines Bausteins nach IEC). Dabei ist eine Plausibilitätsprüfung möglich, z. B. durch einen Typvergleich, derart, dass ein auf Senderseite ausgewähltes Datum nur an eine Variable auf Empfängerseite übertragen werden kann, für die der gleiche Typ definiert ist. Dies verhindert z. B. Situationen, bei denen ansonsten irrtümlich der Status eines binären Prozesssignals, wie z. B. der Status eines Endschalters, als Temperaturmesswert oder dergleichen, also als Analogwert, verarbeitet wird.

Eine besonders bevorzugte Ausführungsform besteht darin, dass für jede Paarung von an einem Datentransfer beteiligten Automatisierungsgeräten jeweils ein separater Datensatz erzeugt und für die aufgrund der Verschaltung zu übertragenden Daten je eine logische Kommunikationsverbindung zwischen den Automatisierungsgeräten aufgebaut wird, über die Telegramme mit den zu transferierenden Daten als Nutzdaten ausgetauscht werden. Für ein erstes Automatisierungsgerät, von dem Daten an ein zweites Automatisierungsgerät und an ein drittes Automatisierungsgerät zu transferieren sind, liegen auf Seiten des ersten Automatisierungsgeräts Daten für die Kommunikation mit dem ersten und mit dem zweiten Automatisierungsgerät vor, während auf Seiten des zweiten und dritten Automatisierungsgeräts jeweils nur Daten für deren Kommunikation mit dem ersten Automatisierungsgerät vorliegen. Dies macht die aufgrund der Verschaltungen entstehenden Netzwerke übersichtlicher und damit für den Programmierer leichter prüf- und wartbar. Zudem ist eine Eindeutigkeit der jeweils generierten Kennzeichnungen für die jeweilige Paarung ausreichend und braucht nicht über jede im Automatisierungssystem insgesamt bestehende Verschaltung eindeutig sein.

Bevorzugt ist vorgesehen, dass die Daten auf Seiten des ersten Automatisierungsgeräts zum Beginn oder zum Ende eines zyklisch ausgeführten Abschnitts des Steuerungsprogramms, insbesondere zum Ende des zyklisch ausgeführten Abschnitts, zusammengestellt werden. Der Begriff "zyklisch ausgeführter Abschnitt des Steuerungsprogramms" meint eine Struktur nach Art eines Unterprogramms und dergleichen in einem Steuerungsprogramm. Einfache Steuerungsprogramme haben nur einen zyklisch ausgeführten Abschnitt. Komplexe Steuerungsprogramme können durchaus eine Vielzahl solcher Abschnitte umfassen. Gemeint ist jedoch, dass jeder Abschnitt von anderen Abschnitten im Wesentlichen unabhängig ist. Die Auswahl eines Beginns oder eines Endes eines solchen Abschnittes zum Zusammenstellen der Daten verlagert das Zusammenstellen auf einen Zeitpunkt vor oder nach der Abarbeitung des durch den jeweiligen Abschnitt gebildeten Teils des Steuerungsprogramms. Das Zusammenstellen der zu transferierenden Daten an einem bestimmten Zeitpunkt außerhalb der Abarbeitung des eigentlichen Steuerungsprogramms hat den Effekt, dass implizit eine Datenkonsistenz garantiert werden kann. Außerhalb der Abarbeitung des eigentlichen Steuerungsprogramms kann es zu keiner Veränderung der vom Steuerungsprogramm generierten und ver- oder bearbeiteten Daten kommen. Das Zusammenstellen zum Ende des zyklisch ausgeführten Abschnitts hat dabei den besonderen Vorteil, dass dies der früheste mögliche Zusammenstellungszeitpunkt ist und insofern die von einer solchen Zusammenstellung erfassten Daten die höchste Aktualität aufweisen.

Für die Empfangsseite gelten grundsätzlich entsprechende Überlegungen, so dass bevorzugt vorgesehen ist, dass die Daten auf Seiten des zweiten Automatisierungsgeräts zum Beginn oder zum Ende eines zyklisch ausgeführten Abschnitts des Steuerungsprogramms übernommen werden. Auch hier gewährleisten Übernahmezeitpunkte außerhalb der eigentlichen Ausführung des Steuerungsprogramms implizit die Datenkonsistenz, wobei eine Übernahme zum Beginn des zyklisch ausgeführten Abschnitts gewährleistet, dass empfangene Daten unmittelbar bei der nächsten Ausführung des zyklischen Abschnitts des Steuerungsprogramms berücksichtigt werden und damit unverzüglich in die Ver- oder Bearbeitung auf Seiten des zweiten Automatisierungsgeräts einfließen.

Als zyklisch ausgeführte Abschnitte eines Steuerungsprogramms kommen in einem festen Zeitraster aufgerufene Unterprogramme, also so genannte Tasks, in Betracht, für die sich bei den Automatisierungsgeräten der Anmelderin die Bezeichnung "Organisationsbaustein" (OB) durchgesetzt hat. Jedes Steuerungsprogramm umfasst zumindest einen Organisationsbaustein und dieser mindestens eine Organisationsbaustein wird entsprechend einer vorgegebenen oder vorgebbaren Zykluszeit aufgerufen. Der Aufruf dieses Organisationsbausteins oder weiterer Organisationsbausteine ist vom Programmierer im Allgemeinen nicht beeinflussbar und wird von Betriebssystem oder einer vergleichbaren Funktionalität des jeweiligen Automatisierungsgeräts gesteuert. Diese Art des Aufrufs wird gemäß der Erfindung ergänzt. Für beispielsweise das Zusammenstellen der Daten auf Seiten des ersten Automatisierungsgeräts zum Ende des zyklisch ausgeführten Abschnitts ist vorgesehen, dass unmittelbar vor dem Ende eines Aufrufs des dem zyklisch ausgeführten Abschnitt entsprechenden Organisationsbausteins ein Aufruf eines speziellen Bausteins erfolgt, der zur Unterscheidung als "Zusammenstellungsbaustein" bezeichnet wird, der alle gemäß der Verschaltung zur Übertragung vorgesehenen Daten in den jeweiligen Sendedatenbereich kopiert. Für die Übernahme transferierter Daten auf Seiten des zweiten Automatisierungsgeräts ist vorgesehen, dass unmittelbar am Anfang des jeweils zyklisch ausgeführten Abschnitts, also am Anfang des jeweiligen Organisationsbausteins, der Aufruf eines speziellen Bausteins erfolgt, der zur Unterscheidung als "Übernahmebaustein" bezeichnet wird, mit dem die transferierten Daten in den lokalen Datenbereich des zweiten Automatisierungsgeräts übernommen werden. Für eine konkrete Ausführungsform ist dabei vorgesehen, dass ein Organisationsbaustein als zyklisch ausgeführter Abschnitt zumindest drei Aufrufe umfasst: Zunächst, und zwar insbesondere als erste Programmcodeanweisung, einen Aufruf des Übernahmebausteins, danach zumindest einen Aufruf eines Bausteins (Funktionsbaustein), der steuerungsprogrammspezifischen Programmcode umfasst oder aufruft, und als darauf folgende, insbesondere letzte Programmcodeanweisung einen Aufruf des Zusammenstellungsbausteins. Durch diese Abfolge wird sichergestellt, dass die Ausführung des steuerungsprogrammspezifischen Programmcodes stets von der Ausführung des Übernahmebausteins und der Ausführung des Zusammenstellungsbausteins unabhängig und Dateninkonsistenz damit implizit vermieden ist.

Im Falle mehrerer zyklisch ausgeführter Abschnitte des Steuerungsprogramms, also z. B. im Falle mehrerer Organisationsbausteine, ist bevorzugt vorgesehen, dass ein Zusammenstellen der zu transferierenden Daten bzw. ein Übernehmen der transferierten Daten für jeden zyklisch ausgeführten Abschnitt einzeln erfolgt, d. h., jeder Organisationsbaustein umfasst neben dem Steuerungsprogramm einen Aufruf seines eigenen Übernahmebausteins und einen Aufruf seines eigenen Zusammenstellungsbausteins. Dies strukturiert zum einen die transferierten Daten, so dass eine Wartung und dergleichen erleichtert wird. Zudem kann ein erster zyklisch ausgeführter Abschnitt bei der Abarbeitung des Steuerungsprogramms ohne weiteres durch einen anderen zyklisch ausgeführten Abschnitt unterbrochen werden, was aber die Konsistenz der in beiden zyklisch ausgeführten Abschnitten bearbeiteten Daten nicht beeinträchtigt, so dass eine separate Zusammenstellung bzw. eine separate Übernahme der von dem Transfer betroffenen Daten sowohl die früheste mögliche Verfügbarkeit der Daten als auch deren Konsistenz gewährleistet.

Wenn im Falle mehrerer zyklisch ausgeführter Abschnitte des Steuerungsprogramms ein Zusammenstellen für jeden zyklisch ausgeführten Abschnitt einzeln, und zwar in unterschiedliche Sendedatenbereiche erfolgt, ist jedem zyklisch ausgeführten Abschnitt ein eigener Sendedatenbereich zugeordnet, so dass sich vergleichsweise einfache Verhältnisse hinsichtlich der Adressierung ergeben, derart, dass in den jeweiligen Sendedatenbereichen nur Daten aus dem lokalen Adressraum des jeweiligen zyklisch ausgeführten Abschnitts kopiert werden müssen.

Bei einer Mehrzahl zyklisch ausgeführter Abschnitte des Steuerungsprogramms kann der Inhalt jedes resultierenden Sendedatenbereichs separat zum zweiten Automatisierungsgerät übertragen werden. Bevorzugt ist allerdings vorgesehen, dass eine Mehrzahl von Sendedatenbereichen von einem hochprioren Teil des Steuerungsprogramms in einem Telegramm zusammengefasst und in dieser zusammengefassten Form an das zweite Automatisierungsgerät übertragen werden. Die eigentliche Datenübertragung zwischen erstem und zweitem Automatisierungsgerät braucht dann für mehrere Sendedatenbereiche nur einmal initiiert werden und ein bei der Datenübertragung unvermeidlicher so genannter Overhead, der sich aufgrund von Konventionen entsprechend dem für die Datenübertragung verwendeten Protokoll ergibt, wird minimiert.

Wie auch im letzten Absatz werden hier und im Folgenden teilweise Begriffe, die einen Speicherbereich, und Begriffe, die Inhalte solcher Speicherbereiche bezeichnen, synonym benutzt. Entsprechend kann ein Begriff wie z. B. Sendedatenbereich je nach Zusammenhang den als Sendedatenbereich verwendeten Teil des Speichers oder den Inhalt dieses Speichers bezeichnen. Darauf wird im Weiteren - auch für eine entsprechende Verwendung bei anderen Begriffen - nicht erneut hingewiesen.

Auf Seiten des als Empfänger fungierenden zweiten Automatisierungsgeräts erfolgen das Empfangen des Inhalts des oder jedes Sendedatenbereichs und die Übernahme der darin enthaltenen Daten entsprechend einer auf der Verschaltung basierenden Empfangsliste und der mit jedem Datum assoziierten Kennzeichnung. Besonders bevorzugt ist dabei vorgesehen, dass ein empfangenes Datum, dessen Kennzeichnung nicht mit einer von der Empfangsliste umfassten Kennzeichnung übereinstimmt, verworfen wird, so dass ein vom Empfänger als unbekannt angesehenes Datum nicht weiter berücksichtigt wird.

Das Verfahren und seine Ausgestaltungen sind bevorzugt in Software implementiert, so dass die Erfindung auch ein Computerprogramm mit durch einen Computer ausführbaren Programmcodeanweisungen zur Implementierung des Verfahrens wie hier und nachfolgend beschrieben betrifft. Als Computer kommt dabei ein Automatisierungsgerät zur Steuerung und/oder Überwachung eines technischen Prozesses, das in einem Automatisierungssystem kommunikativ mit anderen Automatisierungsgeräten verbindbar ist, in Betracht. Die Erfindung betrifft des Weiteren auch ein Speichermedium mit einem durch einen Computer, insbesondere ein solches Automatisierungsgerät, ausführbaren derartigen Computerprogramm und ein Computersystem, insbesondere ein Automatisierungsgerät wie soeben skizziert, auf dem ein solches Computerprogramm geladen oder ladbar ist. Als Speichermedium kommen sämtliche bekannten Speichermedien in Betracht, also insbesondere flüchtige und nichtflüchtige Halbleiterspeicher sowie auf einer magnetischen und optischen Datenspeicherung basierende Medien wie Disketten, CDs, DVDs, usw.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: ein Automatisierungssystem mit einer Mehrzahl von Automatisierungsgeräten,
- FIG 2: eine Verschaltung von Daten zweier Automatisierungs- geräte als Grundlage für einen im Betrieb erfolgenden Datenaustausch,
- FIG 3: einen Datenaustausch aufgrund eines entsprechend ei- ner Sendeliste erzeugten Telegramms und einer auf- grund einer Empfangsliste erfolgenden Übernahme der von dem Telegramm umfassten Daten,
- FIG 4: eine Darstellung zur Veranschaulichung der zeitlichen Abfolge von Vorgängen beim Datenaustausch entspre- chend dem Ansatz gemäß der Erfindung und
- FIG 5: eine Darstellung auf Basis der Verhältnisse aus FIG 4 für Situationen, bei denen die von den Automatisie- rungsgeräten ausgeführten Steuerungsprogramme mehrere zyklisch ausgeführte Abschnitte umfassen.

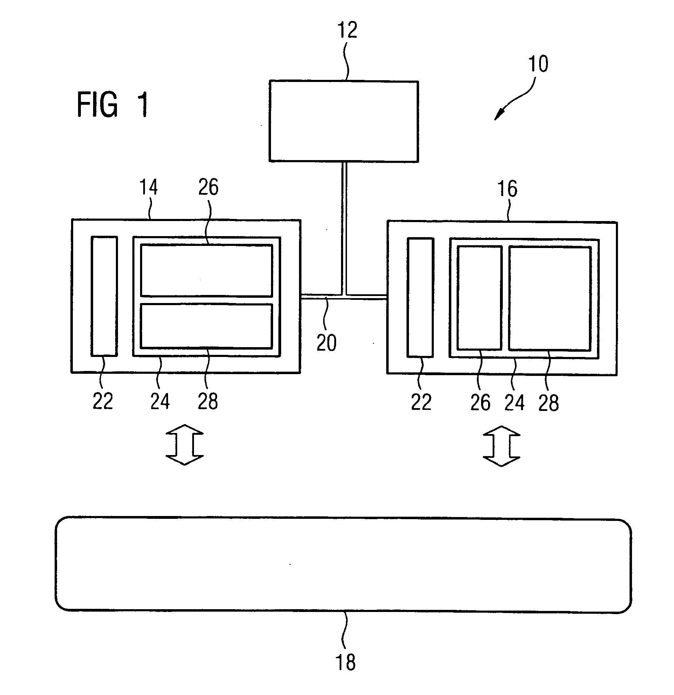

FIG 1 zeigt schematisch vereinfacht ein Automatisierungssystem 10 mit mehreren Automatisierungsgeräten 12, 14, 16. Von den weiteren Automatisierungssystemen sind ein erstes Automatisierungsgerät 14 und ein zweites Automatisierungsgerät 16 zur Steuerung und/oder Überwachung eines nicht näher dargestellten technischen Prozesses 18 vorgesehen. Im Zuge der Prozesssteuerung müssen das erste und zweite Automatisierungsgerät 14, 16 Daten austauschen. Der an sich bekannte Datenaustausch zwischen jedem Automatisierungsgerät 14, 16 und dem technischen Prozess 18, z. B. einem industriellen Fertigungsprozess oder dergleichen, ist durch Blockpfeile dargestellt. Als Kommunikationsmedium für den Datenaustausch zwischen erstem und zweitem Automatisierungsgerät 14, 16 kommt eine an sich bekannte Busverbindung, z. B. ein so genannter Feldbus 20, insbesondere ein Feldbus nach dem unter der Bezeichnung PROFIBUS bekannten Standard, in Betracht.

Für das erste und zweite Automatisierungsgerät 14, 16 ist gezeigt, dass jedes Automatisierungsgerät 12-16 eine Verarbeitungseinheit 22 nach Art eines Prozessors oder dergleichen umfasst und dass in einem Speicher 24 ein durch das jeweilige Automatisierungsgerät 12-16 ausführbares Steuerungsprogramm 26 und dabei generierte und ver- oder bearbeitete Daten 28 vorgehalten werden. Die Art des Steuerungsprogramms 26 legt dabei die Art der Steuerung oder der Überwachung des technischen Prozesses 18 fest. Weitere Details werden anhand der nachfolgenden Figuren erläutert.

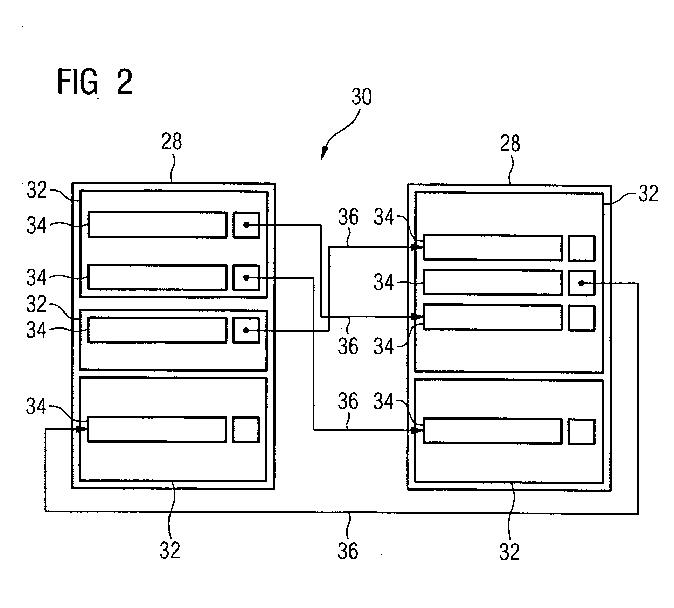

FIG 2 zeigt schematisch vereinfacht, wie bei einer Datenübertragung zwischen einem ersten und zweiten Automatisierungsgerät 14, 16 (FIG 1) eine Auswahl der von dem Transfer betroffenen Daten erfolgen kann.

Das in FIG 2 dargestellte Netzwerk 30 ist eine mögliche Darstellungsform der auf beiden in den Datentransfer involvierten Automatisierungsgeräten 14, 16 vorgehaltenen Daten 28, wobei für die weitere Beschreibung angenommen werden soll, dass auf der linken Seite der Darstellung in FIG 2 eine Darstellung der Daten 28 des ersten Automatisierungsgeräts 14 und auf der rechten Seite eine Darstellung der Daten 28 des zweiten Automatisierungsgeräts 16 gezeigt ist. Die Darstellung kann, wie in FIG 2 gezeigt, Organisationsstrukturen der Daten 28 berücksichtigen, wobei die gezeigten rechteckigen Segmente so genannte Datenbausteine 32 darstellen sollen.

Für einzelne Daten 34 ist deren Einschluss in den Datentransfer zwischen erstem und zweitem Automatisierungsgerät 14, 16 z. B. durch eine graphische Auswahl an sich bekannter Art (z. B. "Anklicken") möglich. Für auf diese Weise auf einer Ursprungsseite, hier also auf Seiten des ersten Automatisierungsgeräts 14, ausgewählte Daten 34 wird auf Empfängerseite, also in den vom zweiten Automatisierungsgerät 16 bearbeiteten Daten 28, eine Zieladresse ausgewählt. Für die graphische Unterstützung des Programmierers kann dies z. B. durch Anklicken des ausgewählten, zu transferierenden Datums 34 und nachfolgendes Anklicken der Zieladresse erfolgen, wobei jede sich auf diese Weise ergebende Verschaltung 36 durch einen Pfeil oder auf sonst geeignete Weise dargestellt wird.

Als Verschaltung 36 wird im Weiteren neben jeder Einzelverbindung eines Ursprungsdatums mit einer Zieladresse auch die Gesamtheit aller Einzelverbindungen bezeichnet.

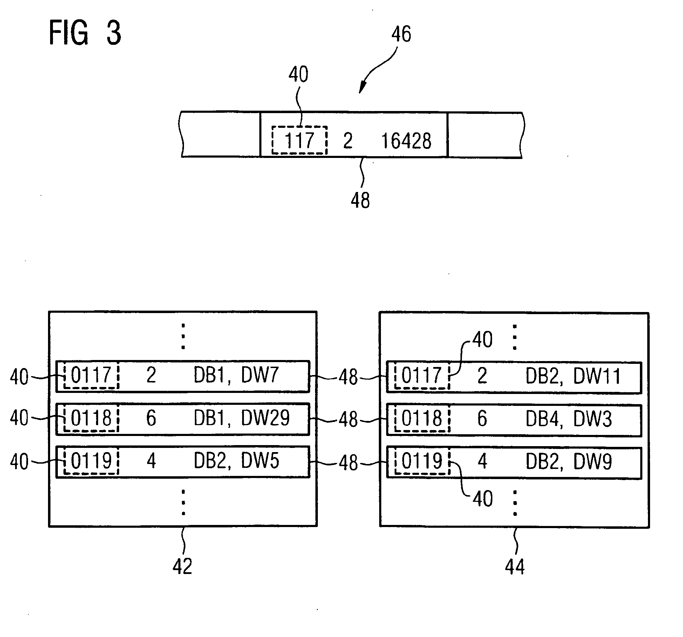

Die Verschaltung 36, wie exemplarisch in FIG 2 dargestellt, erfolgt während einer Projektierungsphase. Während einer solchen Phase ist durch ein Projektierungssystem ein gleichzeitiger Zugriff auf die Daten 28 beider Automatisierungsgeräte 14, 16 möglich, so dass eine Darstellung wie in FIG 2 gezeigt und eine Auswahl der auf Sender- und Empfängerseite betroffenen Daten 34 möglich sind. Bei der Erstellung der Verschaltung 36 wird jedem zu übertragenden Datum 34 eine eindeutige Kennzeichnung 40 zugewiesen, z. B. indem eine solche Kennzeichnung 40 (FIG 3) automatisch im Zusammenhang mit der Erstellung einzelner Verschaltungen 36 erzeugt wird.

Dies ist in FIG 3 mit weiteren Details dargestellt, wobei FIG 3 zeigt, dass auf Basis der Verschaltung 36 (FIG 3) eine Sendeliste 42 und eine Empfangsliste 44 generiert werden. Die Sendeliste 42 umfasst die auf Seiten des als Sender fungierenden ersten Automatisierungsgeräts 14 ausgewählten Daten 34 in einer für das jeweilige Automatisierungsgerät 14, 16 interpretierbaren Form, wobei z. B. "DB1, DW7" eine Quelladresse des ausgewählten Datums 34 bezeichnet und das siebte Datenwort (DW7) im ersten Datenbaustein 32 (DB1) meint. Neben der Kennzeichnung 40 umfasst die Sendeliste 42 für jedes zum Transfer ausgewählte Datum 34 noch eine Information, die die Länge des ausgewählten Datums codiert, hier als "2", "6" und "4" angegeben, so dass dadurch z. B. ausgedrückt ist, dass das im dargestellten Abschnitt der Empfangsliste 42 erste Datum zwei Byte, das darauf folgende Datum sechs Byte und das letzte gezeigte Datum vier Byte belegen.

Die Sendeliste 42 wird auf Senderseite verwendet, um die zum Transfer ausgewählten Daten 34 für die tatsächliche Übermittlung zusammenzustellen. Auf Empfängerseite, also auf Seiten des zweiten Automatisierungsgeräts 16, wird beim Empfangen übertragener Daten die Empfängerliste 44 für eine Übernahme der so erhaltenen Daten in den lokalen Datenbestand 28 ausgewertet. Der eigentliche Datentransfer involviert ein zwischen den Automatisierungsgeräten 14, 16 ausgetauschtes Telegramm 46, von dem in FIG 2 nur ein Ausschnitt gezeigt ist, anhand dessen ersichtlich ist, dass das Telegramm 46 zumindest einen Datensatz 48 umfasst und dass der Datensatz 48 die Kennzeichnung 40 zur Identifikation des jeweils übertragenen Datums 34, eine die Länge des Datums 34 codierende Information, hier "2", zur Codierung eines 2-Byte-breiten Datums und sodann den eigentlichen Aktualwert des Datums 34, hier "16428", umfasst. Der Aktualwert ist der Inhalt der Speicheradresse, die durch die zugrunde liegende Verknüpfung 36 ausgewählt wurde, hier also der Inhalt der durch "DB1, DW7" referenzierten Speicheradresse. Jeder übertragene Datensatz 48 basiert auf einem Datensatz 48 der Sendeliste 42 und jeder übertragene Datensatz 48 wird anhand der Empfangsliste 44 ausgewertet. Dazu wird anhand der vom übertragenen Datensatz 48 umfassten Kennzeichnung 40 in der Empfangsliste 44 ein Datensatz 48 mit einer entsprechenden Kennzeichnung 40, also "117" gesucht. Nach Identifikation des entsprechenden Datensatzes 48 in der Empfangsliste 44 ergibt sich, dass der Aktualwert des übertragenen Datums 34 auf Empfängerseite im zweiten Datenbaustein (DB2) in dessen elftes Datenwort (DW11) zu transferieren ist.

Für jeden erhaltenen Datensatz 48, also jedes darin enthaltene Datum 34, wird also die Zulässigkeit der jeweiligen Kennzeichnung 40 anhand der Empfangsliste 44 überprüft. Des Weiteren werden anhand der Empfangsliste 44 die mit der Kennzeichnung 40 assoziierten Adressinformationen (eine Zieladresse), hier also z. B. "DB2, DW11", und eine die Länge des Datums 34 codierende Information ausgewertet.

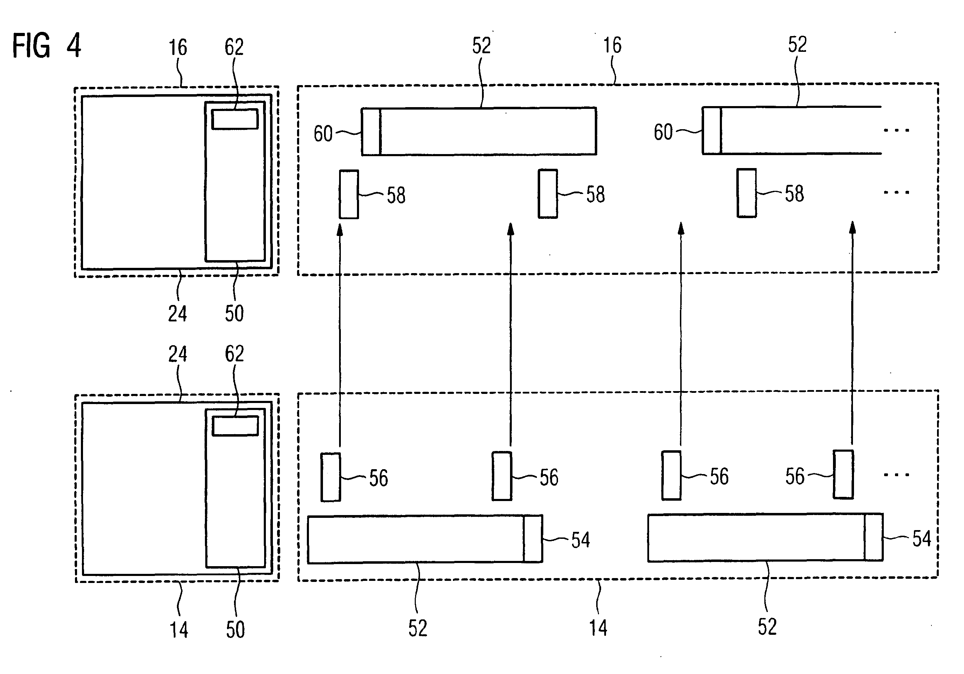

FIG 4 zeigt in schematisch vereinfachter Ansicht zwei Aspekte der an dem Datentransfer beteiligten Automatisierungsgeräte 14, 16. Die Darstellungen im unteren Bereich beziehen sich auf das erste Automatisierungsgerät 14 und entsprechend die Darstellungen im oberen Bereich auf das zweite Automatisierungsgerät 16. Auf der linken Seite ist jeweils der Speicher 24 der beiden Automatisierungsgeräte 14, 16 mit einem darin gebildeten Sende- bzw. Empfangsdatenbereich 50 gezeigt. Die rechte Seite der Darstellung in FIG 4 befasst sich mit der Verdeutlichung der Vorgänge beim Transfer von Daten 34 (FIG 3) zwischen beiden Automatisierungsgeräten 14, 16.

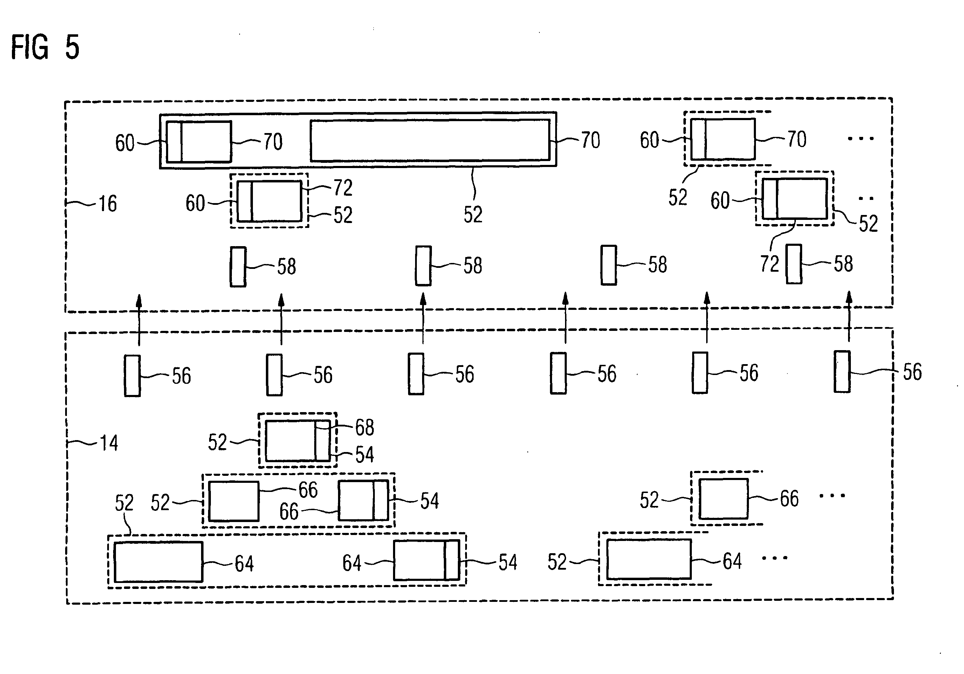

Beide Automatisierungsgeräte 14, 16 führen in an sich bekannter Art und Weise das jeweilige Steuerungsprogramm 26 (FIG 1) aus und es ergibt sich aufgrund der periodischen Ausführung solcher Steuerungsprogramme 14 eine Folge von Verarbeitungszyklen. In der Darstellung ist erkennbar, dass die Verarbeitungszyklen der an dem Transfer beteiligten Automatisierungsgeräte 14, 16 weder gleichlang noch synchron sein müssen. Von dem Steuerungsprogramm 26 ist jeweils ein zyklisch ausgeführter Abschnitt 52 dargestellt. Bei einfachen Steuerungsprogrammen 26 kann es sich ergeben, dass dieses nur einen einzigen zyklisch ausgeführten Abschnitt 52 umfasst, so dass dann Steuerungsprogramm 26 und zyklisch ausgeführter Abschnitt 52 zusammenfallen. Komplexere Steuerungsprogramme 26 weisen mehrere zyklisch ausgeführte Abschnitte 52 auf und sich dabei ergebende Besonderheiten werden in FIG 5 dargestellt.

Bei einem Szenario, bei dem davon ausgegangen wird, dass Daten 34 (FIG 3) vom ersten Automatisierungsgerät 14 an das zweite Automatisierungsgerät 16 zu transferieren sind, ergibt sich grundsätzlich folgender Ablauf: Auf Seiten des ersten Automatisierungsgeräts 14 erfolgt eine Zusammenstellung der zu transferierenden Daten 34 jeweils mit bei der Verschaltung 36 (FIG 2) erzeugter Kennzeichnung 40 (FIG 3) entsprechend einer auf der Verschaltung basierenden Sendeliste 42 (FIG 3). Das Ergebnis dieser Zusammenstellung wird im Sendedatenbereich 50 abgelegt. Als Sendedatenbereich 50 kommt insoweit z. B. ein für den Datentransfer angelegter Datenbaustein in Betracht. Das Zusammenstellen der Daten in dem Sendedatenbereich 50 erfolgt am Ende des zyklisch ausgeführten Abschnitts 52, also z. B. am Ende eines vom Steuerungsprogramm 26 umfassten so genannten Organisationsbausteins, und zwar durch einen zum Zusammenstellen der Daten 34 vorgesehenen Programmbaustein - im Folgenden zur Unterscheidung als Zusammenstellungsbaustein 54 bezeichnet. Der Zusammenstellungsbaustein 54 wird aus dem zyklisch ausgeführten Abschnitt 52, also z. B. aus dem jeweiligen Organisationsbaustein, selbst aufgerufen, so dass der Zusammenstellungsbaustein 54 mit der gleichen Priorität wie der zyklisch ausgeführte Abschnitt 52 ausgeführt wird und resultierend daraus die Ausführung des Zusammenstellungsbausteins 54 nur durch Bestandteile des Steuerungsprogramms 26 oder eventuelle Betriebssystemaufrufe und dergleichen unterbrochen werden kann, die eine höhere Priorität als der zyklisch ausgeführte Abschnitt 52 aufweisen. Eine Unterbrechung des Zusammenstellungsbausteins 54 durch den zugrunde liegenden zyklisch ausgeführten Abschnitt 52 selbst ist jedenfalls nicht möglich, da der Zusammenstellungsbaustein 54 explizit erst am Ende des zyklisch ausgeführten Abschnitts 52 aufgerufen wird. Auf diese Weise ist gewährleistet, dass sämtliche Daten 34, die durch den zyklisch ausgeführten Abschnitt 52 generiert und ver- oder bearbeitet werden, zum Ende von dessen Ausführung in einer konsistenten Form vorliegen, so dass der Zusammenstellungsbaustein 54 in jedem Fall auf konsistente Daten 34 zugreift und eventuelle Unterbrechungen des Zusammenstellungsbausteins 54 jedenfalls keine Daten 34 des zyklisch ausgeführten Abschnitts 52 beeinflussen. Der Sendedatenbereich 50 enthält damit nur Daten, die im selben Durchlauf des zyklisch ausgeführten Abschnitts 52 erzeugt wurden.

Der eigentliche Datentransfer, also das Versenden eines Telegramms 46 zum zweiten Automatisierungsgerät 16 mit dem Inhalt des Sendedatenbereichs 50 als Nutzdaten, kann entweder durch den Zusammenstellungsbaustein 54 oder, wie hier dargestellt, durch einen weiteren Programmbaustein - im Folgenden als Sendebaustein 56 bezeichnet - erfolgen. Der Sendebaustein 56 läuft mit einer vorgegebenen oder vorgebbaren hohen Priorität, die zumindest ausreicht, um sicherzustellen, dass der Sendebaustein 56 nicht durch zyklisch ausgeführte Abschnitte 52 unterbrochen werden kann. Der Sendebaustein 56 seinerseits kann sehr wohl niederpriore, zyklisch ausgeführte Abschnitte 52 des Steuerungsprogramms 26 unterbrechen.

Im Falle der Verwendung eines Sendebausteins 56 kann dieser alle gefüllten Sendedatenbereiche 50 sämtlicher zyklisch ausgeführten Abschnitte 52 sammeln und daraus als Sendetelegramm das Telegramm 46 zum physikalischen Transfer der betroffenen Daten 34 generieren. Der Sendebaustein 56 ist also ein hochpriores Teil des Steuerungsprogramms 26, der den Inhalt eines oder mehrerer Sendedatenbereiche 50 zusammen in einem Telegramm 46 an das zweite Automatisierungsgerät 16 überträgt. Dafür steht dem Sendebaustein 56 bei den Automatisierungsgeräten 14, 16 der Anmelderin einer von mehreren Sendekanälen zur Verfügung. Der Sendebaustein 56 läuft im schnellsten für den erfindungsgemäßen Datentransfer zwischen zwei Automatisierungsgeräten 14, 16 vorgesehenen Zeitraster.

Auf Seiten des als Empfänger fungierenden zweiten Automatisierungsgeräts 16 läuft mit ähnlicher oder gleicher Priorität wie der Sendebaustein 56 ein Empfangsbaustein 58, der zum Empfang von Telegrammen 46, mit denen nach dem Ansatz gemäß der Erfindung Daten 34 zwischen jeweils zwei Automatisierungsgeräten 14, 16 ausgetauscht werden, vorgesehen ist. Der Empfangsbaustein 58 übernimmt die Nutzdaten des Telegramms 46, also die transferierten Daten 34, in einen in dessen Speicher 24 gebildeten Empfangsdatenbereich 50, z. B. einen dafür vorgesehenen Datenbaustein. Der Empfangsdatenbereich 50 ist im Wesentlichen eine lokale Kopie der empfangenen Daten und eine Übernahme dieser empfangenen Daten für das Steuerungsprogramm 26 erfolgt mit einem Übernahmebaustein 60, der jeweils zum Beginn des zyklisch ausgeführten Abschnitts 52 des Steuerungsprogramms 26 des zweiten Automatisierungsgeräts 16 ausgeführt wird.

Das Zusammenstellen der zu transferierenden Daten durch den Zusammenstellungsbaustein 54 erfolgt auf Basis der Sendeliste 42 (FIG 3), d. h., nur diejenigen Daten 34, die gemäß der Verschaltung 36 (FIG 2) und der darauf basierenden Sendeliste 42 als zum Transferieren ausgewählt sind, werden auch tatsächlich übertragen und dazu in den jeweiligen Sendedatenbereich 50 übernommen. Korrespondierend erfolgt die Übernahme der aufgrund des Transfers erhaltenen Daten durch den Übernahmebaustein 60 anhand der Empfangsliste 44, d. h., nur dort ausgewiesene Daten 34 werden an die in der Empfangsliste 44 für jeweils ein Datum 34 angegebene Adresse übernommen. Die Zuordnung der Daten erfolgt dabei anhand der Kennzeichnung 40. Dazu wird auf Seiten des ersten Automatisierungsgeräts 14 der Inhalt des Speichers 24 an der jeweils angegebenen Adresse (z. B. "DB1, DW7") in der angegebenen Größe (z. B. 2 Byte) ausgelesen und der sich so ergebende Inhalt in den Sendedatenbereich 50 eingetragen, und zwar in einen Datensatz, der neben dem ausgelesenen Speicherinhalt noch die dem Datum 34 zugewiesene Kennzeichnung 40 (FIG 3) und die Längeninformation umfasst.

Bei der Übernahme des Empfangsdatenbereichs 50 durch den Übernahmebaustein 60 wird der Empfangsdatenbereich 50 gemäß diesem Layout interpretiert, d. h., es wird die Kennzeichnung 40 eingelesen und anhand der Empfangsliste 44 überprüft, ob der Empfang eines Datums 34 mit einer solchen Kennzeichnung 40 vorgesehen ist. Enthält die Empfangsliste 44 keinen Eintrag mit der jeweils überprüften Kennzeichnung 40, wird der komplette Datensatz im Empfangsdatenbereich 50 verworfen. Findet sich in der Empfangsliste 44 die überprüfte Kennzeichnung 40, so enthält die Empfangsliste 44 die Zieladresse, in die das empfangene Datum 34 zu übernehmen ist (hier z. B. "DB2, DW11"). Die Längeninformation des Datensatzes erlaubt die korrekte Zuordnung beim Auslesen des Datums aus dem Datensatz, hier also aufgrund der Längeninformation von zwei Byte die Information, dass dem Datensatz an der dafür vorgesehenen Stelle zwei Byte zu entnehmen sind, und darüber hinaus auch die Information, dass nach diesen zwei Bytes ein weiterer, neuer Datensatz beginnt.

Auf den Sende- und Empfangsdatenbereich 50 greifen also immer zumindest zwei Instanzen zu, nämlich der Zusammenstellungsbaustein 54 und der Sendebaustein 56 bzw. der Empfangsbaustein 58 und der Übernahmebaustein 60. Für einen kollisionsfreien Zugriff auf Sende- und Empfangsdatenbereich 50 ist vorgesehen, dass der Sende- und Empfangsdatenbereich 50 eine Zugriffskontrollkennzeichnung 62 umfasst.

Für einen schreibenden Zugriff auf den Sendedatenbereich 50 setzt der Zusammenstellungsbaustein 54 zumindest die Zugriffskontrollkennzeichnung 62 auf einen den Schreibzugriff anzeigenden Wert. Zum Ende des Schreibzugriffs wird die Zugriffskontrollkennzeichnung 62 wieder auf einen Wert gesetzt, der die Verfügbarkeit des Sendedatenbereichs 50 für Schreib- oder Lesezugriffe anzeigt. Beim lesenden Zugriff auf den Sendedatenbereich 50 überprüft der Sendebaustein 56 anhand der Zugriffskontrollkennzeichnung 62 die Verfügbarkeit des Sendedatenbereichs 50 für Lesezugriffe und setzt optional im Erfolgsfall die Zugriffskontrollkennzeichnung 62 auf einen vorgegebenen Wert, der den momentanen Lesezugriff auf den Sendedatenbereich 50 anzeigt. Zum Ende des Lesezugriffs wird - ebenfalls optional - die Zugriffskontrollkennzeichnung 62 wieder auf einen Wert gesetzt, der die Verfügbarkeit des Sendedatenbereichs 50 für Schreib- oder Lesezugriffe anzeigt.

Auf diese Weise wird ein gegenseitiger Ausschluss von Zusammenstellungsbaustein 54 und Sendebaustein 56 bei eventuellen kollidierenden Zugriffen erreicht. Eine Nichtverfügbarkeit des Sendedatenbereichs 50 für Lesezugriffe kann sich z. B. ergeben, wenn der Aufruf des (höherprioren) Sendebausteins 56 einen momentanen Schreibzugriff des Zusammenstellungsbausteins 54 auf den Sendedatenbereich 50 unterbricht. Dann macht der Wert der Zugriffskontrollkennzeichnung 62 den unterbrochenen Schreibvorgang für den Sendebaustein 56 erkennbar und entsprechend wird der Inhalt des Sendedatenbereichs 50 für den derzeitigen Aufruf des Sendebausteins 56 ignoriert und eventuell erst beim nächsten Aufruf des Sendebausteins 56 erfasst. Eine Überprüfung einer Zulässigkeit eines Schreibzugriffs auf den Sendedatenbereich 50 durch den Zusammenstellungsbaustein 54 nach dem oben skizzierten Schema ist optional und normalerweise unnötig, da ein solcher Schreibzugriff niemals mit einem Lesezugriff des Sendebausteins 56 kollidieren kann, weil der höherpriore Sendebaustein 56 den Zusammenstellungsbaustein 54 bei der Ausführung verdrängt.

FIG 5 zeigt eine Situation auf Basis der Darstellung in FIG 4, wobei die von den beiden Automatisierungsgeräten 14, 16 ausgeführten Steuerungsprogramme 26 jetzt mehr als einen zyklisch ausgeführten Abschnitt 52, z. B. in Form mehrerer Organisationsbausteine 64, 66, 68, 70, 72, umfassen.

In der Darstellung soll der Abstand der zyklisch ausgeführten Abschnitte 52 vom Seitenrand auch die Priorität der zyklischen Abschnitte darstellen, so dass also bei der Darstellung von einer niedrigen Priorität für einen ersten Organisationsbaustein 64, einer mittleren Priorität für einen zweiten Organisationsbaustein 66 und einer hohen Priorität für einen dritten Organisationsbaustein 68 ausgegangen wird.

Jeder zyklisch ausgeführte Abschnitt 52/jeder Organisationsbaustein 64-72 hat eine ihm bei der Projektierung des Steuerungsprogramms 26 (FIG 1) zugewiesene Priorität, so dass ein Organisationsbaustein 64-72 mit einer hohen Priorität niederpriore Organisationsbausteine 64-72 unterbrechen kann. Der jeweilige Zusammenstellungsbaustein 54 wird jedoch stets am Ende des zyklisch ausgeführten Abschnitts 52/Organisationsbausteins 64-72 aufgerufen, so dass sichergestellt ist, dass der Zusammenstellungsbaustein 54 alle während des gleichen Verarbeitungszyklus generierten und ver- oder bearbeiteten Daten 34 erfasst. Wenn ein erster Organisationsbaustein 64 während der Abarbeitung unterbrochen wird, betrifft dies keine Daten 34, die zum Adressraum des unterbrochenen Organisationsbausteins 64 gehören. Weiter betrifft auch eine Abarbeitung eines Organisationsbausteins zeitlich nach dem Abschluss der Abarbeitung eines anderen Organisationsbausteins normalerweise keine Daten, die zum Adressraum des bereits abgeschlossenen Organisationsbausteins gehören. Eine Konsistenz der von den Zusammenstellungsbausteinen 54 erfassten Daten ist damit implizit gewährleistet. Für die Empfängerseite gilt entsprechend das oben Gesagte: Bei mehreren zyklisch ausgeführten Abschnitten 52 ist für jeden Abschnitt 52/Organisationsbaustein 68-70 ein eigener Übernahmebaustein 60 vorgesehen.

Die Konsistenz der transferierten Daten wird dabei bei einer speziellen Ausführungsform der Erfindung für die Automatisierungsgeräte der Anmelderin durch eine Zuordnung jeder Datenquelle und jedes Datenziels zu jeweils genau einem Organisationsbaustein 64-72 erreicht; Datenquelle und Datenziel sind dabei die in der Verschaltung 36 ausgewählten Speicherstellen der einzelnen Daten 34, die dort jeweils gespeicherten Daten 34 selbst können also auch als Ausgangsdatum und Eingangsdatum aufgefasst werden. Jedes Ausgangsdatum auf Sendeseite wird innerhalb eines bestimmten Organisationsbausteins 64-72 erzeugt, nämlich dort, wo der Aufruf des erzeugenden Bausteins erfolgt. Der erzeugende Baustein ist dabei z. B. ein aus dem Organisationsbaustein 64-72 heraus aufgerufener und insoweit mit gleicher Priorität ausgeführter Funktionsbaustein oder dergleichen. Am Ende der Ausführung des jeweiligen Organisationsbausteins 64-72 wird der Zusammenstellungsbaustein 54 aufgerufen und dieser darf nur Daten sammeln, die in dem Organisationsbaustein 64-72 und nur dort erzeugt wurden, für den der Zusammenstellungsbaustein 54 aufgerufen wird, sonst ist die Konsistenz nicht gewährleistet. Die Information, welches Datum in welchem Organisationsbaustein 64-72 erzeugt wird, ergibt sich neben Kennzeichnung 40, Länge und Ursprungsadresse aus der Sendeliste 42. Für jeden Organisationsbaustein 64-72 existiert ein eigener Sendedatenbereich 50 zum Sammeln der Daten. Der oder jeder Inhalt eines oder mehrerer Sendedatenbereiche 50 wird erst vom Sendebaustein 56 zu einem Telegramm 46 zusammengesetzt. Auf der Empfangsseite geht es analog: Aus der Empfangsliste 44 ergibt sich die Information, in welchem Organisationsbaustein 64-72 das übertragene Datum verarbeitet wird. Jeder Organisationsbaustein 64-72 hat einen eigenen Empfangsdatenbereich 50. Der Empfangsbaustein 58 zerlegt das Telegramm 46 und speichert jedes nach der Empfangsliste 44 zulässige Datum in dem zum Ziel-Organisationsbaustein 64-72 gehörenden Empfangsdatenbereich 50 ab. Dieser wird dann am Anfang der Ausführung des Organisationsbausteins 64-72 vom Übernahmebaustein 60 ausgelesen und die Daten in ihre Zieladresse im Adressraum des Organisationsbausteins 64-72 kopiert.

Wenn vorangehend von Telegrammen 46, z. B. in der Form "ein Telegramm", gesprochen wurde, meint dies nicht notwendig eine in einem Durchlauf erfolgende Datenübermittlung. Bei den Telegrammen 46 der hier relevanten Art ist es z. B. üblich, dass die zu übermittelnden Nutzdaten auf mehrere so genannte Frames verteilt sind, so dass sich jedes einzelne Telegramm je nach Betrachtungsart unter Umständen auch als eine Telegrammfolge darstellen kann. Diese Unterscheidung ist sprachlich in der Anmeldung nicht getroffen worden und es ist davon auszugehen, dass der Begriff "Telegramm" die Datenübertragung auf einem vergleichsweise hohen Abstraktionsniveau bezeichnet.

Die Erfinder haben ihre Erfindung wie folgt beschrieben: Bei Prozessleitsystemen besteht oft die Notwendigkeit, Daten aus einem Automatisierungsgerät auch anderen Automatisierungsgeräten zur Verfügung zu stellen. Diese Aufgabe soll mit möglichst geringem Aufwand für den Projektierer und gleichzeitig mit höchstmöglicher Sicherheit erledigt werden. Dazu wurde das System IK (= implizite Kommunikation) entwickelt. War bisher eine Übertragung von Prozessdaten zwischen verschiedenen Automatisierungsgeräten notwendig, so musste diese vom Projektierer manuell aufgebaut werden. Dazu mussten auf der Sendeseite die zu sendenden Daten in Datenbausteinen aufgesammelt werden, es musste ein Transportbaustein aus dem Bausteinvorrat der jeweiligen CPU-Type ausgewählt und dieser mit entsprechender Ver- und Entsorgung aufgerufen werden. Auf der Empfangsseite musste der entsprechende Empfangsbaustein aufgerufen und die erhaltenen Daten aus einem Empfangs-DB an ihren Bestimmungsort transportiert werden. Die Zuordnung von Sende- und Empfangsdatenbereichen in den DBs zu den echten Prozesssignalen musste vom Anwender manuell gelöst werden und war sehr fehleranfällig, weil nur durch die Position des Wertes im Telegramm bestimmt. Hinzu kommt als prinzipielle Schwierigkeit, dass es nicht möglich ist, zwei Automatisierungsgeräte eines Projekts gleichzeitig zu laden, so dass beim Laden im vollen Betrieb (Delta-Laden) immer eine mehr oder weniger lange Zeitspanne bestand, in der Sende- und Empfangsseite keinen konsistenten Programmstand hatten, wodurch es zu ungültigen Zuständen der Daten kommen konnte. Dieser Effekt war besonders gravierend, wenn eine schon bestehende Datenübertragung geändert oder erweitert werden musste. Weiterhin ist es bei diesem Verfahren schwierig, eine Konsistenz der Daten bei der Übertragung zu gewährleisten, wenn Daten aus verschiedenen OBs übertragen werden müssen. Der Aufruf der Sende- und Empfangsbausteine für die Kommunikation ist sehr komplex und lässt sich mit dem Programm CFC, das innerhalb von PCS 7 hauptsächlich als Projektierwerkzeug für kontinuierliche Prozesse benutzt wird, nicht oder nur sehr schwer korrekt abwickeln. Ziel der Entwicklung IK war, diese ganzen Aufgaben in eine Systemdienstleistung zu verpacken und dem Anwender einen großen Teil der Arbeit abzunehmen. Er sollte nur noch die Topologie des Netzwerks zwischen den Automatisierungsgeräten angeben müssen und danach in der Lage sein, durch einfaches Verschalten per Mausklick im CFC Daten vom Ausgang eines Bausteins in einem Automatisierungsgerät zu einem Eingang an einem Baustein in einem anderen Automatisierungsgerät zu transportieren.

Die Leistung und die Sicherheit des Verfahrens beruhen vor allem auf zwei Tatsachen: Jede Verschaltung über Automatisierungsgerätsgrenzen erhält schon bei der Erstellung der Verschaltung eine eindeutige Identifikation (Kennzeichnung), die bei jedem Transportvorgang mit übertragen wird. Dies verhindert, dass Daten aufgrund geänderter Lage in einem Telegramm an eine falsche Zieladresse gelangen können. Zwischenzustände durch unterschiedliche Ladezeitpunkte der Automatisierungsgeräte werden so ohne Risiko einer Fehlzuordnung beherrscht. Mit Ausnahme dieser Identifikation sind keine gegenseitigen Kenntnisse über die Projektierung (z. B. Speicheradressen) erforderlich. Die Erfassung der Daten und die Übertragung sind getrennt und werden von speziellen Runtime-Programmen auf dem Automatisierungsgerät übernommen, die ihre Anweisungen aus speziellen Datenbausteinen beziehen. Diese Trennung garantiert die Datenkonsistenz, weil die Datenerfassung im erzeugenden OB gerufen wird und so nicht durch die Erzeugung (Zusammenstellung) neuer Daten unterbrochen werden kann. Im empfangenden OB wird die Bereitstellung (Übernahme) der Daten vor die Verarbeitung geschaltet und so sichergestellt, dass immer nur Daten aus einem Quellzyklus verarbeitet werden. In jedem OB, aus dem Daten zu einem anderen Automatisierungsgerät übertragen werden sollen, ist am Ende ein Aufruf eines Runtime-Bausteins (Zusammenstellungsbaustein) eingebaut, der alle zu übertragenden Daten aus diesem OB in einen OB-spezifischen Zwischenpuffer (Sendedatenbereich) kopiert. Die Liste dieser Daten steht in einer oder mehreren Sendelisten, die zu diesem OB gehören; für jedes Ziel-Automatisierungsgerät eine Liste. Zu jedem Datensatz gehören die Identifikation und der aktuelle Wert. Da ein OB sich nicht selbst unterbrechen kann, ist damit Datenkonsistenz gewährleistet, der Zwischenpuffer enthält nur Daten, die im selben Durchlauf des OBs erzeugt wurden. Ein weiterer Runtime-Baustein (Sendebaustein), der im schnellsten für IK zulässigen OB läuft, sammelt die gefüllten Zwischenpuffer aller OBs sowie eventuell noch erforderliche Daten aus den Bausteinen des eigenen OBs zu einem Sendetelegramm und sendet es über einen von drei vorhandenen Sendekanälen an das Partner-Automatisierungsgerät. Dort wird das Telegramm von einem Runtime-Modul (Empfangsbaustein) auf der gleichen OB-Ebene ausgewertet und für jeden Datensatz geprüft, ob seine Identifikation auf dem Empfangs-Automatisierungsgerät bekannt ist. Dazu dienen Empfangslisten mit allen dem Ziel-Automatisierungsgerät bekannten Daten-Identifikationen, getrennt nach Herkunfts-Automatisierungsgerät. Unbekannte Datensätze werden verworfen, so dass auf keinen Fall Daten zu einem falschen Zielort transportiert werden. Bekannte Datensätze werden einem Ziel-OB zugeordnet und in einen OB-spezifischen Zwischenpuffer (Umlaufpuffer; Empfangsdatenspeicher) geschrieben bzw. wenn das Ziel im selben OB liegt wie das Empfangsprogramm, sofort an die Zieladresse geschrieben. Aus dem Umlaufpuffer werden sie von einem Runtime-Modul (Übernahmebaustein), das am Anfang des OBs aufgerufen wird, an die Zieladressen kopiert. So wird auch auf Empfangsseite die Konsistenz sichergestellt.

Der Aufbau der Steuer-DBs und der Einbau der erforderlichen Aufrufe für das Runtime-System der IK wird ohne Eingriff des Anwenders vom Codegenerator von PCS 7 erledigt, ebenso das Laden bzw. Entfernen, falls nötig, der entsprechenden S7-Bausteine durch den PCS 7-Lader. In NetPro wird automatisch eine passende Kommunikationsverbindung (S7-Verbindung) angelegt, so dass für den Anwender lediglich die Aufgabe anfällt, einmalig vor Beginn der Projektierung die Netztopologie (Verschaltung) zu definieren und nach Erzeugen der Verschaltungen im CFC die Daten für die Netzübergänge in die Automatisierungsgeräte zu laden. Daraus ergibt sich zum einen eine enorme Zeitersparnis bei der Projektierung, die pro zu übertragendem Signal je nach Qualifikation des Projektierers 15 bis 30 Minuten betragen kann (beim ersten Signal noch erheblich mehr wegen des Grundaufwands der Übertragung). Bei Projektierungsänderungen werden die erforderlichen Korrekturen an den Datenbeständen und ihre Übertragung an die Automatisierungsgeräte vollautomatisch im Rahmen des normalen Generierens und Ladens erledigt. Als weiteren gravierenden Vorteil erhält der Anwender die Sicherheit, dass alle Übergangszustände, bedingt durch die unvermeidlich unterschiedlichen Ladezeitpunkte, mit absoluter Sicherheit beherrscht werden und ein Übertragen von Daten an falsche Zieladressen ausgeschlossen ist. Weiterhin wird die Auswertung von Störereignissen (z. B. Leitungsunterbrechungen) bei der Projektierung berücksichtigt und bei Bedarf eine entsprechende Leittechnikmeldung generiert. Überlast der Kommunikation und noch nicht abgeschlossene Ladevorgänge (z. B. ein Automatisierungsgerät vergessen zu laden) werden ebenfalls überwacht und bei Auftreten gemeldet. Das Verfahren des Datensammelns in den Quell-OBs sorgt dafür, dass Signale nicht unnötig oft über die Kommunikation übertragen werden und reduziert somit die Kommunikationslast. Die Realisierung des Runtime-Systems IK in der maschinennahen Sprache AWL begrenzt die Belastung der CPU auf Werte, die keine Probleme verursachen sollten.

Insgesamt lässt sich die Erfindung damit kurz wie folgt darstellen: Die Erfindung betrifft ein Verfahren zum Transfer von Daten 34 zwischen einem ersten und einem zweiten Automatisierungsgerät 12, 14, 16, wobei jedes Automatisierungsgerät 12-16 im Betrieb ein Steuerungsprogramm 26 ausführt und dabei Daten 34 generiert und ver- oder bearbeitet, wobei zumindest einmalig eine Verschaltung 36 von Daten der beiden Automatisierungsgeräte 14, 16 erstellt und dabei jedem zu übertragenden Datum 34 eine eindeutige Kennzeichnung 40 zugewiesen wird, mit folgenden Schritten:
- Zusammenstellen der zu transferierenden Daten 34 jeweils mit bei der Verschaltung 36 erzeugter Kennzeichnung 40 durch das erste Automatisierungsgerät 14 entsprechend einer auf der Verschaltung 36 basierenden Sendeliste 42 in einem Sendedatenbereich 50;
- Übertragen des Inhalts des Sendedatenbereichs 50 an das zweite Automatisierungsgerät 16;
- Empfangen des Inhalts des Sendedatenbereichs 50 beim zweiten Automatisierungsgerät 16 und Übernahme der darin enthaltenen Daten entsprechend einer auf der Verschaltung 36 basierenden Empfangsliste 44 und der mit jedem Datum 34 assoziierten Kennzeichnung 40.

## Patentansprüche

1. Verfahren zum Transfer von Daten (34) zwischen einem ersten und einem zweiten Automatisierungsgerät (12, 14, 16) eines Automatisierungssystems (10) zur Steuerung und/oder Überwachung eines technischen Prozesses (18),
wobei jedes Automatisierungsgerät (12-16) im Betrieb ein Steuerungsprogramm (26) ausführt und dabei als Daten (34) interne Daten und externe, sich auf den Prozess (18) beziehende Daten generiert und ver- oder bearbeitet,
wobei zumindest einmalig eine Verschaltung (36) von Daten der beiden Automatisierungsgeräte (14, 16) erstellt wird,
mit folgenden Schritten:
- Zusammenstellen der zu transferierenden Daten (34) durch das erste Automatisierungsgerät (14) entsprechend einer auf der Verschaltung (36) basierenden Sendeliste (42) in einem Sendedatenbereich (50);
- Übertragen des Inhalts des Sendedatenbereichs (50) an das zweite Automatisierungsgerät (16);
- Empfangen des Inhalts des Sendedatenbereichs (50) beim zweiten Automatisierungsgerät (16) und Übernahme der darin enthaltenen Daten entsprechend einer auf der Verschaltung (36) basierenden Empfangsliste (44),
**dadurch gekennzeichnet,**
**dass** bei der Erstellung der Verschaltung jedem zu übertragenden Datum (34) eine eindeutige, automatisch im Zusammenhang mit der Erstellung der Verschaltung (36) erzeugte Kennzeichnung (40) zugewiesen wird,
**dass** beim Zusammenstellen der zu transferierenden Daten (34) diese jeweils mit der bei der Erstellung der Verschaltung (36) erzeugten Kennzeichnung (40) versehen werden und
**dass** die Übernahme des Inhalts des Sendedatenbereichs (50) entsprechend der mit jedem Datum (34) assoziierten Kennzeichnung (40) erfolgt, indem in der Empfangsliste (44) ein Datensatz (48) mit der jeweiligen Kennzeichnung (40) gesucht und das Datum (34) im zweiten Automatisierungsgerät (16) an eine Speicherstelle entsprechend einer in dem Datensatz (48) mit der Kennzeichnung (40) assoziierten Adressinformation geschrieben wird.

2. Verfahren nach Anspruch 1, wobei die Verschaltung (36) während einer Projektierungsphase und für jede Paarung von an einem Datentransfer beteiligten Automatisierungsgeräten (12-16) separat erfolgt.

3. Verfahren nach Anspruch 1 oder 2, wobei die Daten auf Seiten des ersten Automatisierungsgeräts (14) zum Beginn oder zum Ende eines zyklisch ausgeführten Abschnitts (52) des Steuerungsprogramms (26), insbesondere zum Ende des zyklisch ausgeführten Abschnitts (52), zusammengestellt werden.

4. Verfahren nach Anspruch 1, 2 oder 3, wobei die Daten auf Seiten des zweiten Automatisierungsgeräts (16) zum Beginn oder zum Ende eines zyklisch ausgeführten Abschnitts (52) des Steuerungsprogramms (26), insbesondere zum Beginn des zyklisch ausgeführten Abschnitts (52), übernommen werden.

5. Verfahren nach Anspruch 3 oder 4, wobei im Falle mehrerer zyklisch ausgeführter Abschnitte (52) des Steuerungsprogramms (26) ein Zusammenstellen bzw. ein Übernehmen für jeden zyklisch ausgeführten Abschnitt (52) einzeln erfolgt.

6. Verfahren nach Anspruch 3, 4 oder 5, wobei im Falle mehrerer zyklisch ausgeführter Abschnitte (52) des Steuerungsprogramms (26) ein Zusammenstellen für jeden zyklisch ausgeführten Abschnitt (52) einzeln, und zwar in unterschiedliche Sendedatenbereiche (50) erfolgt.

7. Verfahren nach Anspruch 6, wobei eine Mehrzahl von Sendedatenbereichen (50) von einem hochprioren Teil des Steuerungsprogramms (26) zusammen in einem Telegramm (46) an das zweite Automatisierungsgerät (16) übertragen werden.

8. Verfahren nach einem der vorangehenden Ansprüche, wobei ein empfangenes Datum (34), dessen Kennzeichnung (40) nicht mit einer von der Empfangsliste (44) umfassten Kennzeichnung (40) übereinstimmt, verworfen wird.

9. Computerprogramm mit durch einen Computer ausführbaren Programmcodeanweisungen zur Implementierung des Verfahrens nach einem der Ansprüche 1 bis 8, wenn das Computerprogramm auf einem Computer ausgeführt wird, insbesondere einem Automatisierungsgerät (12-16) zur Steuerung und/oder Überwachung eines technischen Prozesses (18).

10. Speichermedium mit einem durch einen Computer, insbesondere ein Automatisierungsgerät (12-16) zur Steuerung und/oder Überwachung eines technischen Prozesses (18), ausführbaren Computerprogramm gemäß Anspruch 9.

11. Computersystem, insbesondere Automatisierungsgerät (12-16) zur Steuerung und/oder Überwachung eines technischen Prozesses (18), auf dem ein Computerprogramm nach Anspruch 9 geladen ist.

## Claims

1. Method for the transfer of data (34) between a first and a second automation device (12, 14, 16) of an automation system (10) for the control and/or monitoring of a technical process (18),
wherein each automation device (12-16) executes a control program (26) during operation, hereby generating and processing or editing, as data, internal data and external data relating to the process (18),
wherein on at least one occasion an interconnection (36) of data from the two automation devices (14, 16) is set up, with the following steps:
- Combination of the data to be transferred (34) by means of the first automation device (14) according to a send list (42) based on the interconnection (36) in a send data area (50);
- Transfer of the contents of the send data area (50) to the second automation device (16);
- Receipt of the contents of the send data area (50) at the second automation device (16) and acceptance of the data contained therein according to a receive list (44) based on the interconnection (36)
**characterised in that**
upon setting-up of the interconnection, an identifier (40) which is unique and generated automatically in conjunction with the setting-up of the interconnection (36) is assigned to each item of data to be transferred (34),
that upon combination of the data to be transferred (34) these are in each case provided with the identifier (40) generated upon the setting-up of the interconnection (36) and that the acceptance of the contents of the send data area (50) takes place according to the identifier (40) associated with each item of data (34), **in that** a data record (48) with the particular identifier (40) is sought in the receive list (44), and the item of data (34) in the second automation device (16) is written to a storage location according to address information associated with the identifier (40) in the data record (48).

2. Method according to claim 1, wherein the interconnection (36) takes place separately during a projection phase and for each pair of automation devices involved in a data transfer (12-16).

3. Method according to claim 1 or 2, wherein the data is combined on the part of the first automation device (14) at the start or at the end of a cyclically executed section (52) of the control program (26), in particular at the end of the cyclically executed section (52).

4. Method according to claim 1, 2 or 3, wherein the data is accepted on the part of the second automation device (16) at the start or at the end of a cyclically executed section (52) of the control program (26), in particular at the beginning of the cyclically executed section (52).

5. Method according to claim 3 or 4, wherein in the case of a multiplicity of cyclically executed sections (52) of the control program (26) a combination, or as the case may be acceptance, takes place individually for each cyclically executed section (52).

6. Method according to claim 3, 4 or 5, wherein in the case of a multiplicity of cyclically executed sections (52) of the control program (26) a combination takes place individually for each cyclically executed section (52), specifically in different send data areas (50).

7. Method according to claim 6, wherein a multiplicity of send data areas (50) are transferred to the second automation device (16) by a high-priority part of the control program (26) together in a telegram (46).

8. Method according to one of the preceding claims, wherein a received item of data (34) whose identifier (40) does not tally with an identifier (40) encompassed by the receive list (44) is discarded.

9. Computer program with program code instructions that can be executed by a computer for the implementation of the method according to claims 1 to 8 if the computer program is executed on a computer, in particular an automation device (12-16) for the control and/or monitoring of a technical process (18).

10. Storage medium with a computer program according to claim 9 which can be executed by a computer, in particular an automation device (12-16) for the control and/or monitoring of a technical process (18).

11. Computer system, in particular automation device (12-16) for the control and/or monitoring of a technical process (18), on which a computer program according to claim 9 is loaded.

## Revendications

1. Procédé de transfert de données ( 34 ) entre un premier et un deuxième appareils ( 12, 14, 16 ) d'automatisation d'un système ( 10 ) d'automatisation pour la commande et/ou le contrôle d'un processus ( 18 ) technique,
dans lequel chaque appareil ( 12 à 16 ) d'automatisation exécute en fonctionnement un programme ( 26 ) de commande et génère comme données ( 34 ) des données internes et des données externes se rapportant au processus ( 18 ) et les transforme ou les traite,
dans lequel on établit au moins une fois une connexion ( 36 ) de données des deux appareils ( 14, 16 ) d'automatisation comprenant les stades suivantes :
on rassemble dans une partie ( 50 ) de données à envoyer les données ( 34 ) à transférer par le premier appareil ( 14 ) d'automatisation conformément à une liste ( 42 ) d'envoi reposant sur la connexion ( 36 ) ;
- on transmet le contenu de la partie ( 50 ) de données à envoyer au deuxième appareil ( 16 ) d'automatisation ;
- on reçoit le contenu de la partie ( 50 ) de données à envoyer dans le deuxième appareil ( 16 ) d'automatisation et on prend en charge les données qui y sont contenues conformément à une liste ( 44 ) de réception reposant sur la connexion ( 36 ) ;
**caractérisé**
**en ce que**, lors de l'établissement de la connexion, on affecte, à chaque donnée ( 34 ) à transmettre, une caractérisation ( 40 ) univoque produite automatiquement en relation avec l'établissement de la connexion ( 36 ) ;
**en ce que**, lors du rassemblement des données ( 34 ) à transférer, on les munit respectivement de la caractérisation (40) produite lors de l'établissement de la connexion ( 36 ), et
**en ce que** l'on effectue la prise en charge du contenu de la partie ( 50 ) de données à envoyer conformément à la caractérisation ( 40 ) associée à chaque donnée ( 34 ), en recherchant dans la liste ( 40 ) de réception un jeu ( 48 ) de données ayant la caractérisation ( 40 ) respective et en écrivant la donnée ( 34 ) dans le deuxième appareil ( 16 ) d'automatisation en un point de mémoire correspondant à une information d'adresse associée dans le jeu ( 48 ) de données à la caractérisation ( 40 ).

2. Procédé suivant la revendication 1, dans lequel on effectue la connexion ( 36 ) pendant une phase de conception et pour chaque accouplement d'appareils ( 12 à 16 ) d'automatisation participant à un transfert de données.

3. Procédé suivant la revendication 1 ou 2, dans lequel on rassemble les données du côté du premier appareil ( 14 ) d'automatisation au début ou à la fin d'une section ( 52 ) exécutée cycliquement du programme ( 26 ) de commande, notamment à la fin de la section ( 52 ) exécutée cycliquement.

4. Procédé suivant la revendication 1 ou 3, dans lequel on prend en charge les données du côté du deuxième appareil ( 16 ) d'automatisation au début ou à la fin d'une section ( 52 ) réalisée cycliquement du programme ( 26 ) de commande, notamment au début de la section ( 52 ) exécutée cycliquement.

5. Procédé suivant la revendication 3 ou 4, dans lequel, dans le cas de plusieurs sections (52) exécutées cycliquement du programme (26) de commande, on effectue individuellement un rassemblement ou une prise en charge pour chaque section (52) exécutée cycliquement.

6. Procédé suivant la revendication 3, 4 ou 5, dans lequel, dans le cas de plusieurs sections ( 52 ) exécutées cycliquement du programme ( 26 ) de commande, on effectue individuellement un rassemblement pour chaque section ( 52 ) exécutée cycliquement et, en fait, dans des parties ( 50 ) de données à envoyer qui sont différentes.

7. Procédé suivant la revendication 6, dans lequel on transmet dans un télégramme au deuxième appareil ( 16 ) d'automatisation une multiplicité de parties ( 50 ) de données à envoyer d'une partie très prioritaire du programme ( 26 ) de commande.

8. Procédé suivant l'une quelconque des revendications précédentes, dans lequel on rejette une donnée ( 34 ) reçue dont la caractérisation ( 40 ) ne coïncide pas avec une caractérisation ( 40 ) comprise dans la liste ( 44 ) de réception.

9. Programme informatique ayant des instructions de code de programme pouvant être réalisées par un ordinateur pour la mise en oeuvre du procédé suivant l'une des revendications 1 à 8, lorsque le programme informatique est exécuté sur un ordinateur, notamment sur un appareil ( 12 à 16 ) d'automatisation pour commander et/ou contrôler un processus ( 18 ) technique.

10. Support de mémoire comprenant un programme informatique suivant la revendication 9, pouvant être réalisé notamment dans un appareil ( 12 à 16 ) d'automatisation pour commander et/ou contrôler un processus ( 18 ) technique.

11. Système informatique, notamment appareil ( 12 à 16 ) d'automatisation pour commander et/ou contrôler un processus ( 18 ) technique, sur lequel un programme informatique suivant la revendication 9 est chargé.
